# EUROPEAN PATENT APPLICATION

(11) **EP 2 028 815 A1**
(43) Date of publication of application: **25.02.2009**
(21) Application number: 07721357.7
(22) Date of filing: 06.06.2007
(51) Int. Cl.: H04L 29/06

(54) **THE METHOD AND SYSTEM FOR DELIVERING THE MESSAGE SERVICE DATA**

(30) Priority: 09.06.2006 CN 200610092913; 22.08.2006 CN 200610111487
(71) Applicant: Huawei Technologies Co., Ltd., Shenzhen, Guangdong Province 518129 (CN)
(72) Inventor: LAI, Hao, Guangdong 518129 (CN); SHI, Youzhu, Guangdong 518129 (CN); CHENG, Hua, Guangdong 518129 (CN)
(74) Representative: Gulde, Klaus W.
(86) International application number: PCT/CN2007/001784
(87) International publication number: WO 2007/143924

(57) **Abstract**

A method for delivering the message service data comprises: adding the message service data into the SIP message or the MSRP message in the message sender party, and delivering the message service data to the message reception party by the SIP message or the MSRP message. A system for delivering the message service data comprises the message service data processing module, which comprises the message adding module and the sending module. Delivering various different types of the message service data can be achieved by utilizing the invention.

## Description

This application claims priority to Chinese Patent Application No. 200610092913.6, entitled "Method and System for Transmitting Message Service Data" and filed with the Chinese Patent Office on June 9, 2006, and priority to Chinese Patent Application No. 200610111487.6, entitled "Method and System for Transmitting Message Service Data" and filed with the Chinese Patent Office on August 22, 2006, the contents of both are incorporated herein by reference in their entireties.

### Field of the Invention

The present invention relates to the field of network communication technologies, and in particular to a method and system for transmitting message service data.

### Background of the Invention

The Internet Multimedia Subsystem (IMS) is a core subsystem of the Next Generation Network (NGN). Under the framework of the NGN, the IMS is required to support both a fixed access and a mobile access. Through the Session Initiated Protocol (SIP), the IMS functions to establish, maintain and manage IP multimedia services and the like, allows rapid and efficient deployment of multimedia services by an operator regardless of network access approaches and terminal device types, supports any type of session over a fixed network and a wireless network such as 802.11, 802.15, 802.16, Code Division Multiple Address (CDMA), Global System for Mobile Communications (GSM), etc., and allows a service provider to provide a user with a series of multimedia services with integration of voice and data.

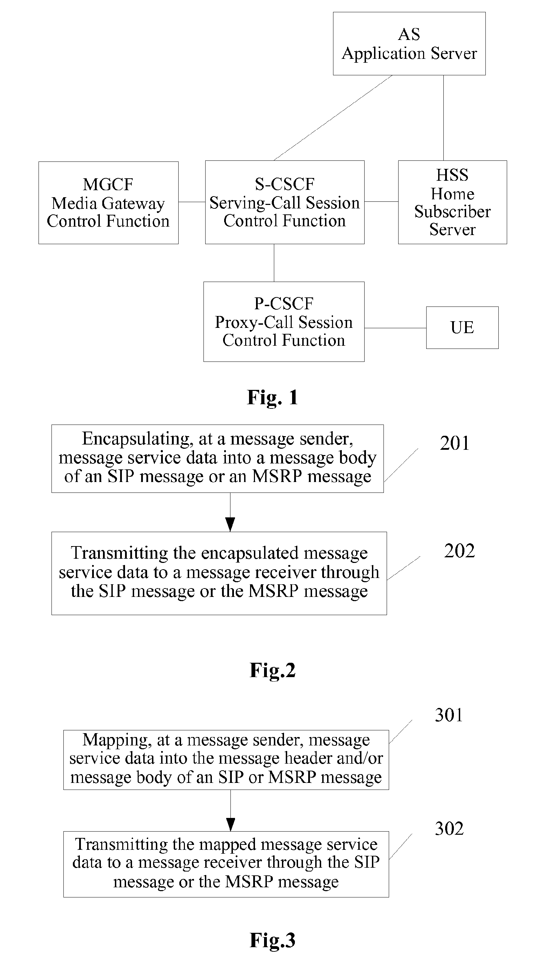

A system structure of the IMS is as illustrated in Fig.1.

Particularly, a Call Session Control Function (CSCF) entity is used for user registration control, session control, etc.; an Application Server (AS) provides various service logic control functions; a Home Subscriber Server (HSS) functions to centrally manage user subscription data; a Media Gateway Control Function (MGCF) entity functions to intercommunicate with a circuit switched network; a user accesses to the IMS via a proxy node, i.e. Proxy-CSCF (P-CSCF); and session and service trigger control and also the service control interaction with the AS are accomplished by a home domain serving node in the registration place of the user, i.e. Serving-CSCF (S-CSCF).

A message service refers to a service in which message entities transmit and receive messages via a service center. The messages may be in a format of text, image, etc. The service center is a service processing system for submitting, storing and forwarding messages.

Traditional message services include a Short Message Service (SMS), a Multimedia Messaging Service (MMS), an Email service, etc. Traditional circuit domain networks include a GSM network, a CDMA network and a Public Switched Telephone Network (PSTN). An SMS protocol stack of a GSM network includes protocols of the application layer, the transfer layer, the relay layer and lower layers, and the protocol of the relay layer is the Mobile Application Part (MAP) protocol. An SMS protocol stack of a CDMA network includes protocols of the teleservice layer, the transfer layer, the relay layer and lower layers, and the protocol of the relay layer is the MAP protocol. An SMS protocol stack of a PSTN network is divided into two categories, one of which includes protocols of the application layer, the transfer layer and lower layers (including the data link layer and the physical layer), and another of which includes protocols of the application layer, the transfer layer, the SMS application service element layer and lower layers, e.g., the Transaction Capabilities Application Part (TCAP) protocol, the Signaling Connection Control Part (SCCP) protocol, etc.

In summary, the SMS protocol stacks of the traditional circuit domain can be divided into a service application layer, a service transfer layer and a service bearer layer. The service application layer may include the above application layer or teleservice layer, the service transfer layer may include the above transfer layer, and the service bearer layer may include the above relay layer or SMS application service unit.

The traditional circuit domain MMS is borne over the Hypertext Transfer Protocol (HTTP) or the Simple Mail Transfer Protocol (SMTP). Typically, the HTTP protocol is used between a terminal and a multimedia short message center, and the SMTP protocol is used between multimedia short message centers.

In the prior art, for the SIP protocol, an SMS is carried in such a way that transfer layer message contents of a GSM network are encapsulated directly and Content-Type: application/vnd.3gpp.sms-t1 is used for indicating that what is encapsulated in the message body is a transfer layer message as defined by the 3rd Generation Partnership Project (3GPP) as follows:

```
        MESSAGE sip:1234567890@domain SIP/2.0 //Send a MESSAGE message to
 1234567890@domain
        From: <sip:0987654321@domain>;tag=c0a80103-13c4-7e84-1ee41f1-2239
        To: <sip:1234567890@domain>
        Call-ID: 247fc650-c0a80103-13c4-7e84-1ee41f1-4883@192.168.1.3
        CSeq: 1 MESSAGE
        Via: SIP/2.0/LTDP 192.168.1.3:5060;branch=z9hG4bK-7e84-1ee41f1-207e
        Content-Encoding: base64 //Encoding method of the message body
        Max-Forwards: 70
        Content-Type: application/vnd.3gpp.sms-tl //Indicate that what is encapsulated
 in the message body is a transfer layer message as defined by the 3GPP
        Content-Length: 32
```

Message services of the IMS domain involve an immediate message service, a session based message service, a deferred delivery message service, etc. The immediate message service refers to a sending terminal transmitting a message directly to a receiving terminal through the MESSAGE (message) method. The session based message service, such as a chat service, refers to the sending terminal and the receiving terminal transmitting a message in a media stream through the Message Session Relay Protocol (MSRP) after establishing a session through the SIP protocol. The deferred delivery message service, similar to the traditional SMS/MMS, refers to a message service involving a store-and-forward process.

With the above encapsulating approach in the prior art, it is impossible to satisfy the demand for carrying different types of message service data, e.g., message service data similar to the traditional MMS type. Also, for a fixed network terminal, it is required that the terminal has to support a terminal protocol stack of the GSM network, that is, it has to parse, in accordance with the protocol stack of the GSM network, a data packet encapsulated in the message body to obtain message contents in the data packet.

### Summary of the Invention

An embodiment of the invention provides a method for transmitting message service data so as to enable transmission of different types of message service data.

An embodiment of the invention further provides a system for transmitting message service data so as to support transmission of different types of message service data.

Therefore, the embodiments of the invention provide the following technical solutions:

A method for transmitting message service data includes:
adding, at a message sender, the message service data into a Session Initiated Protocol message or a Message Session Relay Protocol message; and
transmitting the message service data to a message receiver through the Session Initiated Protocol message or the Message Session Relay Protocol message.

A system for transmitting message service data includes one or more message service data processing modules, wherein the message service data processing module includes:
a message adding module, adapted to add the message service data to be transmitted into a message header and/or a message body of a Session Initiated Protocol message or a Message Session Relay Protocol message; and
a transmitting module communicated with the message adding module, adapted to transmit the Session Initiated Protocol message or the Message Session Relay Protocol message being added with the message service data to a message receiver.

A system for transmitting message service data includes:
a message data adding module, adapted to add message service data into a first message and to transmit the first message to a network element of a message receiver,
wherein the first message is a Session Initiated Protocol domain message carrying the message service data or a traditional circuit domain message carrying the message service data; the message service data is traditional message service data, or message service data carried in a message body of a Session Initiated Protocol message or a Message Session Relay Protocol message;
a message data extracting module, adapted to receive a second message from a network element of a message sender and to extract message service data carried in the second message,
wherein the second message is a Session Initiated Protocol domain message carrying the message service data or a circuit domain message carrying the message service data; and
a message format converting module, adapted to execute message service format conversion when a message service format supported by the first message is different from a message service format supported by the second message.

As can be seen from the above technical solutions according to the embodiments of the invention, the embodiments of the invention add message service data into an SIP message or an MSRP message for transmission, and transmit the message service data to the message receiver through the SIP message or the MSRP message, thereby enabling transmission of different types of message service data. With the embodiments of the invention, not only a transfer layer message of an SMS message of a traditional circuit domain (including a GSM network, a CDMA network, a PSTN network, etc.) but also application layer and bearer layer messages of the SMS message can be transmitted, thereby improving adaptability of a fixed network terminal and reducing device costs.

### Brief Description of the Drawings

Fig.1 is a schematic diagram of a system structure of the existing IMS;

Fig.2 is an implementation flow of a method according to a first embodiment of this invention;

Fig.3 is an implementation flow of a method according to a second embodiment of this invention;

Fig.4 is a principle block diagram of a system according to a first embodiment of this invention;

Fig.5 is a principle block diagram of a system according to a second embodiment of this invention;

Fig.6 is a principle block diagram of a system according to a third embodiment of this invention;

Fig.7 is a principle block diagram of a system according to a fourth embodiment of this invention;

Fig.8 is a flow of processing a message when different function sub-modules in a message format determining module of the system according to this invention are located in different network entities;

Fig.9 is a flow of processing a message when the message format determining module and a message format converting module of the system according to this invention are located in the same network entity; and

Fig.10 is a principle block diagram of a fifth embodiment of the system according to this invention.

### Detailed Description of the Embodiments

The embodiments of the invention add message service data into an SIP message or an MSRP message, and carry and transmit the message service data through the SIP message or the MSRP message. The SIP message or the MSRP message carries the message service data by an encapsulating approach or a mapping approach. The case that the message service data are carried by the encapsulating approach is taken as an example. If SMS data are to be transmitted, SMS service application layer data and/or service transfer layer data and/or service bearer layer data are encapsulated into the message body of an SIP message or an MSRP message. If MMS data are to be transmitted, a Simple Mail Transfer Protocol (SMTP) message or a Hypertext Transfer Protocol (HTTP) message is encapsulated into the message body of an SIP message or an MSRP message. The SMTP message can include both an SMTP command, which may be a DATA command, and message contents, or only include message contents. The HTTP message includes an HTTP method, which may be a POST method, an HTTP header and an HTTP body. If Email data are to be transmitted, an SMTP message is encapsulated into the message body of an SIP message or an MSRP message. The SMTP message can include both an SMTP command and message contents, or only include message contents. Taking the case that the message service data are carried by the mapping approach as an example, message service control parameters are carried in the message headers or header parameters or message bodies or message body application fields of an SIP message or an MSRP message; and message service contents are carried in the message body of an SIP message or an MSRP message, or in an XML label of the message body.

As known to those skilled in the art, message service data of the traditional circuit domain (including a GSM network, a CDMA network, a PSTN network, etc.) can be divided into message service control parameters and message service contents. Particularly, the message service control parameters may include receiver address information, an indication of a service request from a user, for example, an indication of a request for a Delivery report, a request for a Read reply, etc. The message service contents may include a display mode and media contents of a message, where the display mode describes the arrangement and presentation mode of the media contents, and the media contents may include texts, images, audio, video, etc.

In the embodiments of the invention, the message service control parameters and the message service contents can be encapsulated into the message body of an SIP message or an MSRP message in a description format of a traditional message service, or the message service control parameters and the message service contents can be put into the message header and/or the message body of an SIP message or an MSRP message and then be carried and transmitted in a description format of the SIP message or the MSRP message. The former is referred to as "encapsulating message service data" in the embodiment of the invention, and the latter is referred to as "mapping message service data" in the embodiment of the invention. Hereinafter, the two transmission approaches are described respectively.

Firstly, descriptions are given regarding the "encapsulating message service data" approach.

Referring to Fig.2, which illustrates an implementation flow of the first embodiment of the method according to the invention, the implementation flow includes the following steps.

Step 201: Encapsulating, at a message sender, message service data into a message body of an SIP message or an MSRP message.

The message service data may be in a message service format of a GSM network, a CDMA network or a PSTN network.

As known to those skilled in the art, the SIP protocol offers an advanced telephone service across the Internet, and functions to create, modify and terminate a session or sessions of or between one or more participants. The session(s) may include an Internet multimedia conference, an Internet (or any IP network) telephone call and a multimedia publication. The members involved in the session(s) can communicate over a multicast or unicast network to contact. The SIP protocol supports session descriptions and allows the participants to reach an agreement about a set of compatible media types. It also supports mobility of a user through proxy and request for redirecting to a site where the user is currently located. The SIP protocol is not bound with any specific conference control protocol.

If respective communication parties need to execute an immediate message session for a longer time in which numerous messages are to be exchanged in a period of time, the session can be initiated by use of the SIP INVITE message and the MSRP protocol. The MSRP protocol can enable transmission of a text of an immediate message, as in the SIP protocol that the Real-time Transfer Protocol (RTP) can enable transmission of voice packets in an IP telephone call.

Step 202: Transmitting the encapsulated message service data to a message receiver through the SIP message or the MSRP message.

The above message service data include message service control parameters and message service contents. The encapsulating approach of the SIP message is similar to that of the MSRP message, and a Multipurpose Internet Mail Extensions (MIME) media type or an MIME body field in the SIP/MSRP message body, or a header parameter in the SIP/MSRP message can be used to indicate information of the message service data encapsulated in the SIP/MSRP message body. Particularly, the MIME media type, the MIME body field and the header parameter can be an extended application of an existing MIME media type, MIME body field and header parameter in the SIP protocol or the MSRP protocol, or can be an extended MIME media type, MIME body field and header parameter.

Descriptions of carrying message service data of the traditional circuit domain are given below by way of an example of transmitting the message service data in the SIP domain.

For transmission of SMS service data, SMS service application layer data and/or service transfer layer data and/or service bearer layer data can be encapsulated into the message body of an SIP message or an MSRP message.

For transmission of MMS service data, contents in the SMTP DATA command or contents in the HTTP POST method can be encapsulated into the message body of an SIP message.

In addition to the data of the traditional message service per se, the specific encapsulated contents shall also indicate information of the encapsulated traditional message contents, including the format of the message contents (e.g., a network over which the encapsulated service data originate, an SMS or an MMS), and further including a protocol layer to which the message contents belong (e.g., whether transfer layer data or bearer layer data are encapsulated). The indication may occur in the following ways by way of an example of encapsulating an SMS bearer layer message of a CDMA network:
(1) a message content media type, in the format of MIME type and named application/vnd.3gpp2.sms-r1, is defined in the message body of an SIP message to indicate that what are encapsulated in the message body are message contents of an SMS bearer layer message as defined by the 3GPP2; or
(2) a traditional message content indication parameter, for example named "version", is defined in the message header or the message body of the SIP message to indicate the specific encapsulated contents, and the message content indication parameter can be a header parameter in the SIP message or a field in the message body.

It shall be noted that the above message content media type and message content indication parameter are defined logically. Specifically, they can be a newly extended application of a parameter and message body defined in the SIP protocol, or an extended application of an existing parameter and message body in the SIP protocol.

Descriptions are given below of carrying message service data in an Internet Multimedia Subsystem (IMS) domain in the method (encapsulating approach) according to this embodiment of the invention by way of an example of a message service in a CDMA network.

An SMS message of the CDMA network is encapsulated into the message body of an SIP/MSRP message, possibly a bearer layer message format of the SMS message of the CDMA network is encapsulated, that is, MAP contents are encapsulated directly.

The encapsulated contents are indicated by the MIME media type (application/vnd.3gpp2.sms-r1) as follows:

```
        MESSAGE sip: receiver@example.com, SIP/2.0 //Send the message to
 receiver@example.com
        Content type: application/vnd.3gpp2.sms-r1 //The newly added media type
 indicates that what is encapsulated is a bearer layer message as defined by the 3GPP2,
 that is, an MAP message is encapsulated
```

Alternatively, the encapsulated contents are indicated by the header parameter "version" in the Content type message header as follows:

```
        MESSAGE sip: receiver@example.com, SIP/2.0
        Content type: application/message, version= vnd.3gpp2.sms-rl // Indicated by
 the header parameter of the Content type
```

Alternatively, the encapsulated contents are indicated by the field "version" in the MIME body as follows:

```
        MESSAGE sip: receiver@example.com, SIP/2.0
        Content type: application/message
```

For an MMS message of the CDMA network (being defined by the 3GPP2 or by the Open Mobile Alliance (OMA)), it is encapsulated into the message body of an SIP/MSRP message, possibly in a way that MMS parameters and message contents carried in the HTTP or SMTP message are packaged into the message body of the SIP/MSRP message.

The encapsulated contents can be indicated by the MIME media type as follows:

```
        MESSAGE sip: receiver@example.com, SIP/2.0
        Content type: application/vnd.oma.mms
```

Alternatively, the encapsulated contents can be indicated by the header parameter added in the Content type message header as follows:

```
        MESSAGE sip: receiver@example.com, SIP/2.0
        Content type: application/message, version= vnd.oma.mms
```

As can be seen, for a message of a GSM network, a CDMA network or a PSTN network, message service data are encapsulated in the MIME body in the message body, and the message service data in different formats can be carried in different MIME bodies in a way that the different message service formats are described by the MIME media type; or can be carried in the same MIME body in the message body while the different message service formats are described by the message content indication parameter.

By an encapsulating approach, the embodiment of the invention encapsulates message service data into the message body of an SIP or MSRP message for transmission, so that not only a transfer layer message of an SMS message of the traditional circuit domain (including a GSM network, a CDMA network, a PSTN network, etc.) but also an application layer message and a bearer layer message of the SMS message can be encapsulated and transmitted, and a message of another format of the traditional circuit domain can also be encapsulated and carried, thereby enabling transmission of different types of message service data.

Descriptions are given below regarding the "mapping message service data" approach.

Referring to Fig.3, an implementation flow of the second embodiment of the method according to the invention includes the followings steps.

Step 301: Mapping, at a message sender, message service data into the message header and/or the message body of an SIP message or an MSRP message.

For example, message service control parameters are carried in message headers or header parameters or MIME bodies or MIME body fields in the SIP message; and message service contents are carried in an MIME body or an XML label of the MIME body in the SIP message or the MSRP message.

Also, for establishment of a session-type message service, message service control parameters are carried in message headers or header parameters or MIME bodies or MIME body fields in the MSRP message; and message service contents are carried in an MIME body or an XML label of the MIME body in the MSRP message.

Step 302: Transmitting the mapped message service data to a message receiver through the SIP message or the MSRP message.

The above message service control parameters may include a Message type indicator, Message class, Delivery report indication, Read reply indication, and Subject, Reply Path, etc. Particularly, the Message type indicator identifies the type of the message, for example, a transmission message, a delivery message or a notification message; the Message class indicates whether the message is a private message, an advertisement or else; the Delivery report indication means that the sender requests a message center for notifying the sender while the receiver has received the message; the Read reply indication means that the sender requests the receiver for notifying the sender while the receiver has read the message; the Subject refers to the subject of the message; and the Reply Path means that the sender requests the message center for transmitting a response of a receiving terminal to the sender upon reception of the response.

Therefore, in a specific implementation, according to information of types, the number, etc., of message service control parameters to be transmitted, header parameters for the message service control parameters can be defined in the SIP/MRTP message, and the message service control parameters can be carried in the header parameters; or message headers for the message service control parameters can be defined in the SIP/MRTP message, and the message service control parameters can be carried in the message headers, where the message headers for the message service control parameters each may correspond to one or part or all of the message service control parameters of the message; or media types can be defined in the message body of the SIP/MRTP message, and the message service control parameters can be carried in the message body; or fields for the message service control parameters can be defined in the message body of the SIP/MRTP message, and the message service control parameters can be carried in the fields.

Particularly, the message header and the header parameter can be an extended application of an existing message header and header parameter in the SIP/MRTP protocol, or can be an extended message header and header parameter in the SIP/MRTP protocol. Also, the application field in the message body can be an extended application of an existing application of the message body in the SIP/MRTP protocol, or can be an extended application of the message body in the SIP/MRTP protocol, and the application of the message body may include an XML label or a body field in the message body.

Descriptions of carrying message service control parameters are given below by way of the Message type indicator.
(1) Head parameters for the message service control parameters are defined in the SIP/MSRP message, for example, a message type indicator parameter named Message-type-Indicator for carrying the Message type indicator.
(2) Message headers for the message service control parameters are defined in the SIP/MSRP message, and the message headers for the message service control parameters each can correspond to one of the actual message service control parameters, for example, a message type indicator header named X-Message-type-Indicator for carrying the Message type indicator, or can correspond to all or a specific type of the message service control parameters, for example, a message information header named P-Message-Header, and a message type indicator parameter and other parameters can be carried in the P-Message-Header message header as parameters of the message header.
(3) A media type, in the format of MIME type and named application/message, is defined in the message body of the SIP/MSRP message, and the message service control parameters are carried in an XML label in the message body, for example, the Message type indicator is carried in a message-type-indicator label.
(4) A plurality of fields for the message service control parameters are defined in the message body of the SIP/MSRP message, for example, a message type indicator field named X-Message-type-Indicator for carrying the Message type indicator.

The above message type indicator header, message information header, message service control parameter, message type indicator parameter, media type of the message and message type indicator field are defined logically. Specifically, they can be a newly extended parameter, message header and application of message body defined in the SIP or MSRP protocol, or can be an extended application of an existing parameter, message header and application of message body defined in the SIP or MSRP protocol.

The required message service control parameters can be carried by one of the above approaches alone or by more than one of them in combination.

Message service control parameters used in the traditional circuit domain are not limited to the above, and other message service control parameters can also be carried in an SIP/MSRP message by the above approaches.

Furthermore, message service control parameters of the traditional circuit domain can be combined into one parameter or a specific type of parameters in an SIP/MSRP message, and then be carried by the above approaches. For example, the message type indicator parameter is a compulsory parameter for all SMS and MMS messages in a CDMA network, a GSM network and a PSTN network, except that definitions and values of the parameter may be different, and the message type indicator parameter can be carried in an extended message header or XML label in the message body of the SIP/MSRP message.

Further descriptions of carrying message service data in the IMS domain in the method (mapping approach) according to this embodiment of the invention are given below by way of an example of transmitting a message.

(1) A terminal in the IMS domain fills a request URI (Uniform Resource Identifier) of the MESSAGE message with a receiver address (or a message center address). In the message, the parameters of a Delivery report indication, a Read reply indication, etc., are carried in extended message headers of an SIP message, and the type of contents is carried in the existing message header Content-Type of the SIP message. In the message body of the SIP message, the display mode of message contents is described by the Synchronous Multimedia Integration Language (SMIL), and the message contents are carried directly in the message body of the SIP message. Message service data carried in the SIP message are as follows:

```
        MESSAGE sip: receiver@example.com, SIP/2.0
        X-Message-type-Indicator: message submit request //Message type indicator
 header
        X-Message-Class: personal //Message class header
        X-Delivery-Report: Yes //Delivery report indication header
        X-Read-reply: Yes //Read reply indication header
        X-Subject: Test //Message subject header
        Content-Type: multipart/related; type="application/smil";
                 start="<nXYxAE@pres.vancouver.example.com>";
                 boundary="=_005A0428C1257165_="
        -=_005A0428C1257165_=
        Content-Type: application/smil //Message display mode in which a test.jpeg
 image is displayed in an upper position and the text of "This is a test!" is displayed
 below the image
        Content-ID: nXYxAE@pres.vancouver.example.com

        <smil>
              <header>
                <layout>
                   <root-layout height="200" width="176" />
                   <region id="Image" height=" 150" width=" 176" />
                   <region id="Text" height="50" width="176" fit="scroll" />
                </layout>
              </header>
              <body>
                <par >
                  <image src="test.jpeg" region="Image" />
                  <text src="test.txt" region="Text" />
                </par>
              </body>
        </smil>

        --=_005A0428C1257165_=
        Content-Type: text/plain; name="test.txt" //Contents of the text in the message
        This is a test!
        -=_005A0428C1257165_=
        Content-Type: image/jpeg; name="test.jpg" //Contents of the image in the
 message
......
```

(2) The message service control parameters of a Delivery report indication, a Read reply indication, etc., in the message are carried in different parameters in an extended message header (P-Message-Info) as follows:

```
        MESSAGE sip: receiver@example.com, SIP/2.0
        P-Message-Info: Message-type-Indicator=message submit request, //Message
 type indicator parameter
        Message-Class=personal //Message class parameter
        Delivery-Report=Yes //Delivery report indication parameter
        Read-reply=Yes //Read reply indication parameter
         Subject=Test //Message subject parameter
```

(3) The parameters of a Delivery report indication, a Read reply indication, etc., in the message are carried in XML labels in the message body, and the message contents (This is a test message!) are also carried in an XML label as follows:

```
        MESSAGE sip: receiver@example.com, SIP/2.0

        Content-Type: multipart/related; type="application/message+xml";
        start="<nXYxAE@pres.vancouver.example.com>";
        boundary="=_005A0428C1257165_="

        -=_005A0428C1257165_=
        Content-Type: application/message+xml //Newly added media type of the
 message
        Content-ID: <nXYxAE@pres.vancouver.example.com>

        <?xml version="1.0" encoding="UTF-8"?>
            <message xmlns="um:ietf:params:xml:ns:message">
            <message-type-indicator> message submit request <message-type-indicator>
 //XML label of Message type indicator
            <message-class> personal <message-class>//XML label of Message class
            <delivery-report.Yes<delivery-report>//XML label of Delivery report
            <read-reply>Yes<read-reply>//XML label of Read reply
            <content> This is a test message! <content>//Message contents
        </message>
```

(4) The message service control parameters of a Delivery report indication, a Read reply indication, etc., in the message is carried in different fields in the message body as follows:

```
        MESSAGE sip: receiver@example.com, SIP/2.0

        Content-Type: multipart/related; type="application/message+xml";
             start="<nXYxAE@pres.vancouver.example.com>";
             boundary#"=_005A0428C1257165_="

        --=_005A0428C1257165_=
             Content-Type: application/message-para
        Content-ID: <nXYxAE@pres.vancouver.example.com>

        X-Message-type-Indicator: message submit request // Message type indicator
 field in the message body
X-Message-Class: personal
X-Delivery-Report: Yes
X-Read-reply: Yes
X-Subject: Test
......
```

In the embodiment of the invention, a message for carrying message service data may be an SIP MESSAGE, INFO message, or an MSRP SEND message. The above message service control parameters can also be carried partly in the message header and partly in the message body.

Similar to the previous method, in the mapping approach, not only traditional message service data are mapped into an SIP message or an MSRP message, but also the SIP message or the MSRP message shall also indicate information of traditional message contents, including the format of the traditional message contents, etc., which can be described by a message content media type or a message content indication parameter.

As can be seen, the difference between the encapsulating approach and the mapping approach lies in that: for the former, the message service control parameters in an existing description format of a traditional message service are integrally encapsulated in the message body of an SIP message or an MSRP message together with the message service contents; and for the latter, the message service contents and the message service control parameters are carried in the description format of the SIP message or the MSRP message. For example, the message service control parameters are mapped from the description format of the traditional message service to the description format of the SIP message or the MSRP message, and as another example, the binary format of SMS message service contents can be described in text format. When sending the message service by the encapsulating approach, the IMS terminal shall support description formats of traditional message services, and at this time, the SIP message or the MSRP message is just a transmission channel for the traditional message service. When sending the message service by the mapping approach, the IMS terminal shall support only the description format of the SIP message or the MSRP message.

Additionally, there is a special mapping approach in which the message service control parameters are mapped and the message service contents are still encapsulated in the existing description format of the traditional message service.

It shall also be noted that message service control parameters of a traditional message is not compulsory, that is, may or may not be carried in an SIP message or an MSRP message.

As can be seen, by the mapping approach, the embodiments of the invention carries message service data in the message header and/or the message body of the SIP message or the MSRP message, so that a fixed network terminal can properly parse the message service data carried in the SIP message or the MSRP message without being required to support the terminal protocol stack of the GSM network, thereby improving adaptability of the fixed network terminal and reducing the device costs.

The foregoing descriptions relate to an application in which SMS/MMS message service data in a GSM network, a CDMA network and a PSTN network are encapsulated or mapped into an SIP message. Furthermore, Email message service data can also be encapsulated or mapped into an SIP message, and the format of the Email message service data can be described by a message content indication parameter or an MIME media type. Because the format of the Email message service data is similar to the foregoing message service formats, repeated descriptions thereof are omitted here.

As known to those skilled in the art, different networks shall be enabled to intercommunicate in the Next Generation Network (NGN), and therefore a message service format supported by the sender network element of message service data may be different from a message service format supported by the receiver network element of the message service data.

With respect to this case, an embodiment of the invention can arrange a message format converting module in the SIP domain, and the message format converting module is adapted to execute message service format conversion for a sent or received SIP/MSRP message, so as to enable intercommunication between the sender network element and the receiver network element if the message service format supported by the sender network element is different from that supported by the receiver network element. The sender network element and the receiver network element may be respectively located in the SIP domain and the circuit domain, or be respectively located in the SIP domain and another IP domain (e.g., the Internet), or be both located in the SIP domain. That is, the message format converting module can execute message service format conversion between the SIP domain and the circuit domain, or between the SIP domain and another IP domain, or within the SIP domain. Message service format conversion conducted by the message format converting module includes conversion of message service control parameters and conversion of message service contents.

Conversion of message service control parameters can include processes of parameter addition, parameter deletion, parameter modification, etc. Particularly, by the message format converting module: the parameter addition may newly add a parameter required in a destination message service format; the parameter modification may make a transformation for a parameter with identical or similar meaning, for example, there are parameters for indicating message type for both the sender and the receiver, and only modification for the bearer protocol is executed, as well as transformation for values of the parameters, for example, the message type is changed from message submission to message delivery; and the parameter deletion may delete a parameter unsupported in the destination message service format or is not required for the receiver network element.

Conversion of message service contents includes conversion of a display mode and conversion of a media format, and may be content addition, content deletion, content modification, etc. Particularly, the content modification may include transformation of a description manner of a display mode and transformation of a media format, for example, a description language of a display mode of a message is modified to a display mode supported by the receiver and a media format is modified to the media format supported by the receiver; in accordance with user subscription, the content addition may newly add media contents by the message format converting module; and the content deletion may delete message contents unsupported in the destination message service format by the message format converting module, for example, descriptions of a display mode.

An interface of the message format converting module for the inside of the IMS domain may be an SIP interface, an interface of the message format converting module for the outside of the IMS domain may be an interface between message centers, and the interface between message centers may be a Simple Mail Transfer Protocol (SMTP) interface. Alternatively, an interface of the message format converting module for the inside of the IMS domain may be an interface between an IMS interface gateway and the message center, which may be an MAP interface, an HTTP interface, etc.

Further descriptions of a process of converting a format of message service control parameters in the method according to an embodiment of the invention are given below by way of an example of parameter modification.

1. It is assumed that an IMS terminal sends a message to a GSM network terminal.

(1) The message format converting module is located between the terminal and the message center, message service control parameters sent from the IMS terminal, such as a Message type indicator and the like, are carried in message headers, and the message format converting module modifies the message headers to MAP message service control parameters or HTTP message service control parameters without changing the meaning of the values of the parameters.

An illustrative comparison between message service control parameters in an SIP message and those in an HTTP message is as shown in Table 1 below:

**Table 1:**

| Message service control parameters carried in SIP message headers | Message service control parameters carried in HTTP message |
|---|---|
| X-Message-type-Indicator: Message submit request | Message Type: m-send-req |
| X-Message-Class: personal | Message-Class: personal |
| X-Delivery-Report: Yes | Delivery-Report: Yes |
| X-Read-Reply: Yes | Read-Reply: Yes |

Here, the Message type indicator, the Message class, the Delivery report indication and the Read reply indication are directly converted to the parameters carried in an HTTP message. The case of being carried in an MAP message is similar to this, and therefore repeated descriptions thereof are omitted here.

(2) The message format converting module is located in the message center or between message centers, message service control parameters sent from the IMS terminal are carried in message headers, the message format converting module modifies contents of the parameters, and new parameters are carried in an MAP message or an SMTP message.

An illustrative comparison between message service control parameters in an SIP message and those in an SMTP message is as shown in Table 2 below:

**Table 2:**

| Message service control parameters carried in SIP message headers | Message service control parameters carried in SMTP message |
|---|---|
| X-Message-type-Indicator: message submit request | X-Mms-Message-Type: m-forward-req |
| X-Message-Class: personal | X-Mms-Message-Class: personal |

Particularly, the "submit" message type is converted to the "m-forward-req" message type intermediately used by the message. The case of being carried in an MAP message is similar to this, and therefore repeated descriptions thereof are omitted here.

2. It is assumed that a GSM network terminal sends an SMS to an IMS domain terminal.

(1) The message format converting module is located between the terminal and the message center, and the message format converting module fills extended SIP message headers with parameters carried in an MAP message without changing the meaning of the parameters.

An illustrative comparison between message service control parameters in an MAP message and those in an SIP message is as shown in Table 3 below:

**Table 3:**

| Message service control parameters carried in MAP message | Message service control parameters carried in SIP message headers |
|---|---|
| TP-Message-Type-Indicator=00(SMS delivery req) | X-Message-type-Indicator: message delivery request |
| TP-Reply-Path=1(The parameter is set) | X-Reply-path: True |

Here, the Message type indicator and the Reply Path are directly converted to SIP message headers.

(2) The message format converting module is located in the message center or between message centers, and the message format converting module receives parameters carried in an MAP message, modifies contents of the parameters, and contents of new parameters are carried in SIP message headers.

An illustrative comparison between message service control parameters in an MAP message and those in an SIP message is as shown in Table 4 below:

**Table 4:**

| Message service control parameters carried in MAP message | Message service control parameters carried in SIP message headers |
|---|---|
| TP-Message-Type-Indicator=01 (SMS submit req) | X-Message-type-Indicator: message delivery request |
| TP-Reply-Path=1(The parameter is set) | X-Reply-path: True |

Particularly, the MAP is a simulated parameter, and here the "submit" message type is converted to the "delivery" message type.

3. It is assumed that a CDMA network terminal sends an MMS to an IMS domain terminal.

(1) The message format converting module is located between the terminal and the message center, and the message format converting module fills extended SIP message headers with parameters carried in an HTTP message without changing the meaning of the parameters.

An illustrative comparison between message service control parameters in an HTTP message and those in an SIP message is as shown in Table 5 below:

**Table 5:**

| Message service control parameters carried in HTTP message | Message service control parameters carried in SIP message headers |
|---|---|
| Message Type: m-send-req | X-Message-type-Indicator: message submit request |
| Message class: personal | Message class: personal |

Here, the Message type indicator and the Message class are directly converted to SIP message headers.

(2) The message format converting module is located in the message center or between message centers, and the message format converting module receives parameters carried in an SMTP message, modifies contents of the parameters and contents of new parameters are carried in SIP message headers.

An illustrative comparison between message service control parameters in an SMTP message and those in an SIP message is as shown in Table 6 below:

**Table 6:**

| Message service control parameters carried in SMTP message | Message service control parameters carried in SIP message headers |
|---|---|
| X-Mms-Message-Type: m-forward-req | X-Message-type-Indicator: message delivery request |
| X-Mms-Message-Class: personal | Message class: personal |

Here, the "submit" message type is converted to the "delivery" message type.

4. It is assumed that an IMS terminal sends a message to an IMS terminal.

In the case that an IMS terminal sends a message to an IMS terminal, by the mapping approach, message service data are carried in a MESSAGE message sent from the sender, and illustrative relevant parameters in the MESSAGE message are as follows:

```
        MESSAGE sip: receiver@example.com, SIP/2.0
        X-Message-type-Indicator: message submit request
        X-Read-reply: Yes
......
```

The receiver supports the encapsulating approach by which a message is packaged in a CDMA network format. The message format converting module located in the message center extracts message service control parameters and message service contents from the MESSAGE message, encodes them in a transfer layer message format of a CDMA network, changes the message indication identifier therein from "Message Identifier" to "delivery", and then encapsulates them into the message body of the MESSAGE message for transmission to the message receiver. The Content type message header in the MESSAGE message can be set as Content type: application/vnd.3gpp2.sms-tl.

Further descriptions of a process of converting a format of message service control parameters in the method according to an embodiment of the invention are given below by way of an example of parameter addition.

It is assumed that an IMS terminal sends a message to a PSTN network terminal.

(1) The message format converting module is located between the terminal and the message center, the message sent from the IMS terminal carries only control parameters of a receiver address, and the message format converting module adds necessary parameters required for the receiver.

An illustrative comparison between message service control parameters in an SIP message and those in an HTTP message is as shown in Table 7 below:

**Table 7:**

| Message service control parameters carried in SIP message headers | Message service control parameters carried in HTTP message |
|---|---|
| | Message Type: m-send-req |
| | MMS-Version: 1.0 |

Here, the parameters of Message Type and MMS Version are newly added parameters in the HTTP message. The case of being carried in an MAP message is similar to this, and therefore repeated descriptions thereof are omitted here.

(2) The message format converting module is located in the message center or between message centers, the message sent from the IMS terminal carries only control parameters of a receiver address, and the message format converting module adds necessary parameters required for the receiver.

An illustrative comparison between message service control parameters in an SIP message and those in an SMTP message is as shown in Table 8 below:

**Table 8:**

| Message service control parameters carried in SIP message headers | Message service control parameters carried in SMTP message |
|---|---|
| | X-Mms-Message-Type: m-forward-req |

Here, the parameter of Message type in the SMTP message is a newly added parameter. The case of being carried in an MAP message is similar to this, and therefore repeated descriptions thereof are omitted here.

Further descriptions of a process of converting a format of message service control parameters in the method according to an embodiment of the invention are given below by way of an example of parameter deletion.

1. It is assumed that a CDMA network terminal sends an MMS to an IMS terminal.

The message format converting module is located in the message center or between message centers, and the message format converting module receives parameters carried in the SMTP message, deletes parameters which are not required to be carried in a destination message and carries contents of new parameters in SIP message headers.

An illustrative comparison between message service control parameters in an SMTP message and those in an SIP message is as shown in Table 9 below:

**Table 9:**

| Message service control parameters carried in SMTP message | Message service control parameters carried in SIP message headers |
|---|---|
| X-Mms-Message-Type: m-forward-req | X-Message-type-Indicator: message notification request |
| X-Mms-Read-Reply: yes | |

Here, the "read-reply" parameter is not required to be carried in the "notification" message and thus is deleted from the message.

2. It is assumed that an IMS terminal sends a message to an IMS terminal.

An IMS terminal sends a message to an IMS terminal, message service data are carried in the MESSAGE message sent from the sender by the mapping approach, and illustrative relevant parameters in the MESSAGE message are as follows:

```
        MESSAGE sip: receiver@example.com, SIP/2.0
        X-Message-type-Indicator: message submit request
        X-Read-reply: Yes
......
```

The receiver does not support extended parameters of "X-Message-type-Indicator" Message type indicator and the like. The message format converting module located in the message center deletes the message service control parameters of "X-Message-type-Indicator" Message type indicator and the like, and sends the MESSAGE message to the receiver.

It shall be noted that the message service control parameters are all illustratively carried in the message headers of the SIP message in the above illustrations, but they can be carried in other ways for a specific implementation process.

Descriptions of a process of converting a format of message service contents in the method according to an embodiment of the invention are given below.

It is assumed that a GSM network terminal sends to an IMS terminal an SMS that carries texts and a small image of a telephone, which are displayed in a way of a line of texts (hello), a line of a 16*16 image (telephone) and then another line of texts (One small telephone here).

The message service contents and the display mode of the GSM message are illustrated as follows:

```
         SMS User Data Header: UDHL=24, IEI=11, IEIDL=22, IED1=08, <% (small
 picture 32bytes)>
         SMS User Data: Hello!<CR><LF><CR><LF>One small telephone here
```

The message format converting module converts the display mode to an SMIL language description supported by the IMS domain, converts the 32-byte image to a bmp-format image supported by the IMS domain, and adds bmp-format media, which are illustrated as follows:

```
        --=_005A0428C1257165_=
        Content-Type: application/smil
        <smil>
          <head>
           <layout>
             <root-layout height="200" width="150" />
             <region id="Text" height="20" width="150" />
             <region id="Image" height="20" width="20" />
             <region id="Text" height="20" width="150" />
           </layout>
          </head>
          <body>
           <par>
             <text src="hello" region="Text" />
             <image src="telephone.bmp" region="Image" />
             <text src=" One small telephone here " region="Text" />
           </par>
          </body>
        </smil>

        --=_005A0428C1257165_=
        Content-Type: image/jpeg; name="telephone.bmp"
......
```

Deletion of message service contents is similar to the above process or can be considered as a simplification of modification, and a specific embodiment thereof is not further presented here.

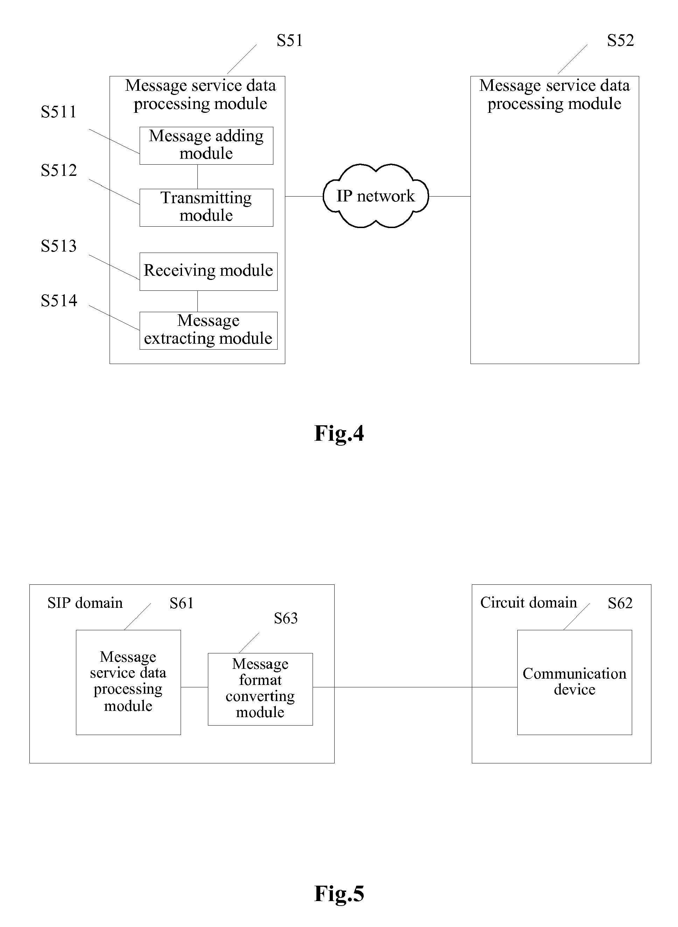

Fig.4 illustrates a principle block diagram of the first embodiment of the system according to the invention.

The system includes message service data processing modules S51 and S52 communicated over an IP network, each of which includes a message adding module S511 and a transmitting module S512. Particularly, the message adding module S511 is adapted to add to-be-transmitted message service data into a message header and/or a message body of an SIP message or an MSRP message. For example, the message service data are encapsulated into the message body of the SIP message or the MSRP message or are mapped into the message header and/or the message body of the SIP message or the MSRP message. The transmitting module S512 communicated with the message adding module S511 is adapted to transmit the SIP message or the MSRP message being added with the message service data to a message receiver.

Of course, each of the message service data processing modules in the system can further receive the SIP message or the MSRP message from another message service data processing module. Therefore, a receiving module S513 and a message extracting module S514 can further be arranged in the system. Particularly, the receiving module S513 is adapted to receive an SIP message or an MSRP message from the message service data processing module S52; and the message extracting module S514 communicated with the receiving module S513 is adapted to extract message service data from the SIP message or the MSRP message received by the receiving module S513.

The message service data processing module S52 also includes the above modules although they are not shown.

By way of an example of an SIP message, when the message service data processing module S51 needs to transmit message service data, firstly the message adding module S511 encapsulates the message service data into the message body of the SIP message or maps the message service data into the message header and/or the message body of the SIP message; and a specific encapsulating or mapping approach is similar to the foregoing descriptions of the method according to the embodiments of the invention, and repeated descriptions thereof are omitted here. Then, the transmitting module S512 transmits the encapsulated or mapped SIP message to the opposite network device S52.

Upon reception of the SIP message sent from the opposite message service data processing module S52, the receiving module S513 of the message service data processing module S51 passes the SIP message to the message extracting module S514, and the message extracting module then extracts the message service data from the SIP message.

The message service data processing module can be located in a terminal device or a network device.

The respective modules of the message service data processing modules can be located in the same device or in different devices. The message adding module and the transmitting module can be located in the same device, and the receiving module and the message extracting module can be located in the same device.

The devices where the message service data processing modules located can communicate with each other over an SIP network, can communicate with the circuit domain network over the SIP network, and can communicate with other IP networks (e.g., the Internet) over the SIP network.

In the NGN, because different networks shall be enabled to intercommunicate, the message service format supported by the sender network element of message service data may be different from that supported by the receiver network element of the message service data.

With respect to this case, Fig.5 illustrates a principle block diagram of the second embodiment of the system according to the invention.

A message service data processing module S51 is located in an SIP domain, and a communication device S61 is located in a circuit domain or an SIP domain. The communication device is a message service data processing entity of the existing circuit domain. In order to enable an opposite communication device to identify message service data, a message format converting module S63 is further included in this embodiment, which communicates with the message service data processing module S61 of the SIP domain network via an SIP interface or an MSRP interface. The message format converting module S63 communicates with the communication device S62 via an MAP, HTTP or SMTP interface.

The message format converting module S53 is adapted to convert the message service format of an SIP/MSRP message to be transmitted when the message service format supported by the sender is different from that supported by the receiver.

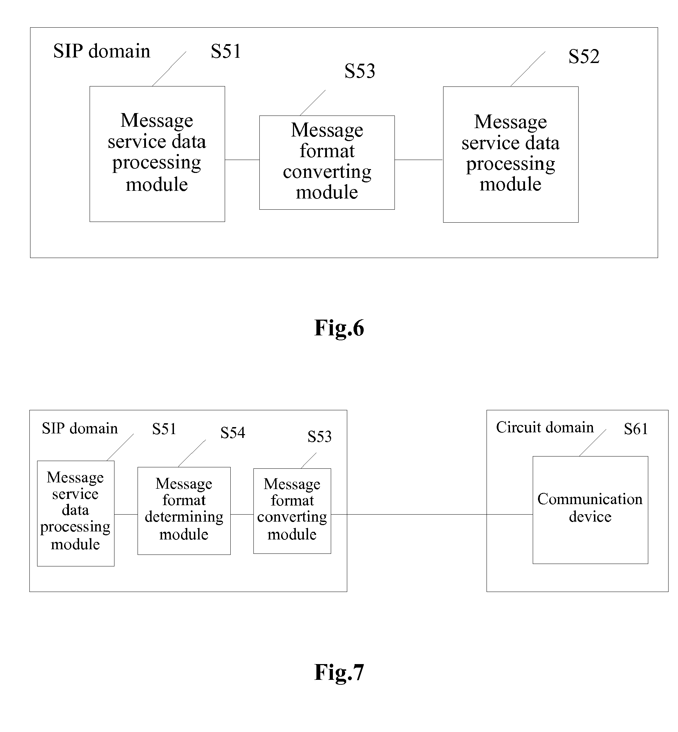

When the sender and the receiver are both in the SIP domain but support different message service formats, the message format converting module S53 can also accomplish message service format conversion, a principle block diagram of which is shown in Fig.6. The message service data processing module S51 and the message service data processing module S52 are respectively message service data processing modules of the sender and the receiver. The message format converting module S53 communicates with the message service data processing module S52 via an SIP interface or an MSRP interface.

The message format converting module S53 can be located anywhere in the SIP domain as a separate entity, or be integrated in a network element in the SIP domain.

The message format converting modules in the SIP domain corresponds to composition of message service data. That is, the message format converting modules are configured according to message service formats supported by respective network elements in a network during planning of the network to enable the message format converting modules to accomplish message service format conversion as required.

Conversion of different message service formats by the message format converting module is similar to the foregoing descriptions of the method according to the invention, and therefore repeated descriptions thereof are omitted here.

In order to further facilitate the use of the message format converting module among different communication devices, a message format determining module S54 adapted to determine a source message service format and a destination message service format can further be arranged between the message service data processing module S51 and the message format converting module S53 as illustrated in Fig.7.

By way of an example of an SIP message, the message service data processing module S51 carries message service data through an SIP message and transmits the message to the message format determining module S54; the message format determining module S54 obtains attribute information of the receiver in accordance with the address of the SIP message, determines the destination message service format, and notifies the message format converting module S53 about the source message service format and the destination message service format; and the message format converting module S53 converts the source message service format to the destination message service format according to the notification and transmits the converted message to the communication device S61 of the circuit domain.

Similar to Fig.6, the message format converting module S53 can transmit the converted message to another message service data processing module of the SIP domain for message service format conversion within the SIP domain, a principle diagram of which are omitted here.

The message format determining module S54 can obtain the attribute information of the receiver from a public database in a Domain Name Server (DNS) network, an E.164 Number (ENUM) network and the like, or can determine from local configuration information of a message service application server whether the network to which the message receiver belongs is in an IMS domain or a circuit domain. In the case of the IMS domain, the destination message service format, such as supporting an encapsulated format or a mapped format, can be determined from terminal capability. In the case of the circuit domain, a network interface type, such as a GSM network, a CDMA network or a PSTN network, can be determined from a receiver identifier of message service data, and whether it is in an SMS network or an MMS network can be determined according to whether the message service contents are texts or multimedia.

Therefore, the message format determining module can be divided into several different sub-modules as required for a practical application. For example, it can be divided into a network type determining sub-module, a network interface type determining sub-module, a message service type determining sub-module and a terminal capability determining sub-module. The network type determining sub-module can obtain the attribute information of the receiver from a public database in a Domain Name Server (DNS) network, an E.164 Number (ENUM) network and the like, or can determine from local configuration information of a message service application server whether the network to which the message receiver belongs is in an IMS domain or a circuit domain. In the case of the IMS domain, the terminal capability determining sub-module can determine from terminal capability the message service format supported by the message receiver, for example: whether a traditional message service is supported, an encapsulated format or a mapped format is supported, a text format or a multimedia format is supported, and which kind of multimedia format is supported, etc. The terminal capability of the message receiver can be obtained by the terminal capability determining sub-module during registration of the message receiver, where the terminal capability is carried in a registration message, or can be obtained by the terminal capability determining sub-module from a response message returned from the message receiver after the message service is transmitted to the message receiver, that is, the message service is typically transmitted to the message receiver firstly, and the terminal capability of the message receiver is carried in the returned response message if the message receiver does not support the format of the message service. In the case of the circuit domain, the network interface type determining sub-module determines from the receiver identifier of the message whether the network interface type is a GSM network, a CDMA network or a PSTN network. Furthermore, the message service type determining sub-module can further determine from the message service contents the format of the message service data sent from the message sender, for example: from the foregoing MIME media type of the message service contents and/or the message content indication parameters and the like.

An interface of the message format converting module for the outside of the IMS domain may be an interface between message centers (e.g., an SMTP interface) or an interface between an IMS interface gateway and the message center (e.g., an MAP interface, an HTTP interface, etc.).

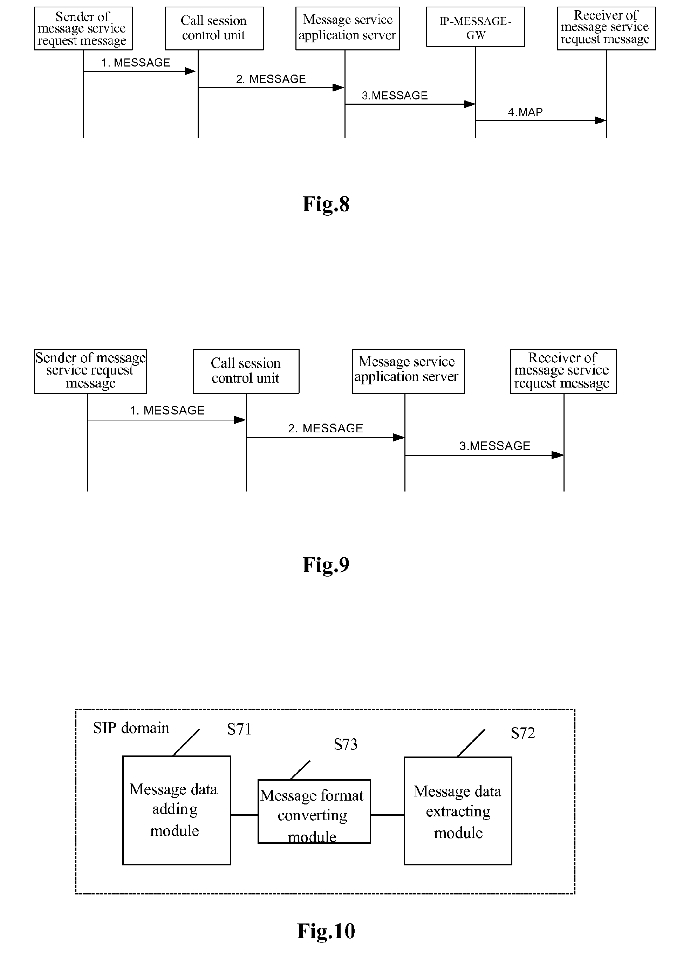

It is assumed that the network type determining sub-module and the network interface determining sub-module are located in a message service application server, the message service type determining sub-module is located in an IP-MESSAGE-GW (IP message gateway), and the message format converting module is located in the IP-MESSAGE-GW. A message interaction flow of them is as illustrated in Fig.8.

(1) A sender of a message service request message sends a request message, e.g. a message, to a call session control unit of the network, and message service data of a text format are carried in the request message. A destination identifier in the message is the identifier of the message service application server, for example, Request-URI of the message is as-message@example.com. The message service data are carried in the message by the mapping approach. An illustrative example is as follows:

```
        MESSAGE sip: as-message@example.com, SIP/2.0
        X-Message-type-Indicator: message submit request
        X-Read-reply: Yes
......
```

(2) In accordance with the destination identifier in the message service data, the call session control unit triggers the message service data to the message service application server through "ifc".

(3) The message format determining module in the message service application server determines from the destination identifier that the receiver belongs to a GSM network of the circuit domain, adds the type of the destination message service format into the message through an extended message header of Message-format, and transmits the message to the IP-MESSAGE-GW. An illustrative example is as follows:

```
        MESSAGE sip: receiver@example.com, SIP/2.0
        Message-format: version = gsm
```

X-Message-type-Indicator: message submit request X-Read-reply: Yes

(4) The IP-MESSAGE-GW determines the message header of message service format in the message, converts the message service format to an SMS message of the GSM network, and transmits the message to the message receiver through the MAP protocol.

The network interface type determining sub-module can also be located in the IP-MESSAGE-GW (IP message gateway), and in this case, the message service application server determines from the destination identifier that the receivers belongs to the circuit domain, and transmits the received message directly to the IP-MESSAGE-GW, and the IP-MESSAGE-GW determines the specific network type of the circuit domain, determines the destination message service format and performs message service format conversion. This process is similar to the above flow, and descriptions of a specific interaction flow thereof are omitted here.

The message format determining module and the message format converting module can be located in the same network element or in different network elements.

It is assumed that the message format determining module and the message format converting module are located in a message service application server. A message interaction flow of them is as illustrated in Fig.9.

(1) A sender of a message service request message sends a request message, e.g. message, to a call session control unit of the network, and message service data of a multimedia format is carried in the request message. A destination identifier in the message is the identifier of the message service application server, for example, Request-URI of the message is as-message@example.com. The message service data are carried in the message by the encapsulating approach, e.g., Content type: application/vnd.3gpp2.sms-tl.

(2) In accordance with the destination identifier in the message service information, the call session control unit triggers the message service data to the message service application server through "ifc".

(3) The message format determining module in the message service application server determines from the destination identifier that the receiver belongs to an IMS domain, knows from the terminal capability of the receiver that the receiver only supports a message service format of the mapping approach, and notifies the message format converting module to convert the message service format to the message service format of the mapping approach, and then the message format converting module converts the message service format of the encapsulating approach to the message service format of the mapping approach. An illustrative example is as follows:

```
        MESSAGE sip: receiver@example.com, SIP/2.0
        X-Message-type-Indicator: message submit request
        X-Read-reply: Yes
......
```

(4) The message service application server transmits the converted message to the message receiver.

As can be seen, the message format determining module and the message format converting module can enable both conversion between message service formats in different domains and conversion between message service formats of the encapsulating approach and the mapping approach, thereby enabling transmission of various message service data and enabling the receiver to obtain the message service data properly.

In general, the message format converting module can accomplish conversion between an SIP message or an MSRP message being encapsulated with traditional message service data and a traditional message service data, and the obtained traditional message service data can be encapsulated into the SIP message or the MSRP message; or extract the traditional message service data from the SIP message or the MSRP message. Furthermore, if the format of the traditional message service data is inconsistent with that supported by the message receiver, for example, the format of the extracted traditional message service data is GSM and that supported by the message receiver is CDMA, the message format converting module can execute conversion between the two traditional message service data formats.

In the NGN, because different networks shall be enabled to intercommunicate, including intercommunication between the circuit domain and the IMS domain, intercommunication between SIP domains with different capabilities, intercommunication between an SIP message with no support for encapsulating or mapping traditional message service data and an SIP message with support for encapsulating or mapping traditional message service data.

With respect to this case, Fig.10 illustrates a principle block diagram of the fifth embodiment of the system according to the invention.

Particularly, a message data adding module S101 and a message data extracting module S102 are located in the SIP domain, and a message format converting module S103 communicates with the message data adding module S101 and the message data extracting module S102 via an SIP interface or an MSRP interface. The message data adding module S101 is adapted to add message service data into a message (a first message) and to transmit the message to a network element of a message receiver, and the message data extracting module S102 is adapted to receive a message (a second message) sent from a network element of a message sender and to extract message service data carried in the second message. The message format converting module 103 is adapted to execute message service format conversion when a message service format supported by the first message is different from a message service format supported by the second message. The message service data can be traditional message service data encapsulated or mapped in an SIP message or an MSRP message, or can be message service data carried in the message body of a common SIP message or a common MSRP message, for example, message contents carried in an SIP message or an MSRP message with support for encapsulated or mapped traditional message service data.

By way of an example of an SIP message, the message data adding module S101 carries message service data through the SIP message and transmits the message to the message format converting module S103, and the message format converting module S103 converts a source message service format to a destination message service format and transmits the converted message to the message data extracting module S102.

An interface between the message data adding module and the message format converting module can be an SIP interface or an MSRP interface, or can be an MAP interface, an SMTP interface or an HTTP interface of the traditional circuit domain. An interface between the message data extracting module and the message format converting module can be an SIP interface or an MSRP interface, or can be an MAP interface, an SMTP interface or an HTTP interface of the traditional circuit domain. In the case of an interface of the traditional circuit domain (an MAP interface, an SMTP interface or an HTTP interface), the processes of message addition, extraction and format conversion are similar to the above processes.

The message format converting module can further accomplish conversion between an SIP message or an MSRP message mapped with traditional message service data and a traditional message service message, parse the obtained traditional message service data, map message service control parameters into a description format of the SIP message or the MSRP message, and message service contents can be mapped, encapsulated, or kept in the original description format, and then can be carried in the SIP message or the MSRP message; or parse the obtained message service control parameters from the SIP message or the MSRP message and map the message service control parameters into the description format of the traditional message service, and the message service contents can be mapped, or kept in the original description format, and traditional message service data can be generated. Here, because the contents of the traditional message also support an MIME media type format, such as MMS and Email, the message service contents can be kept in the original description format during conversion.

The message format converting module can further accomplish conversion between an SIP message or an MSRP message being encapsulated or mapped with traditional message service data and a common SIP message or a common MSRP message with no support for encapsulating or mapping traditional message service data, and contents of the messages can be mapped mutually or be kept in their original description formats.

The message format converting module can further accomplish conversion between an SIP message or an MSRP message being encapsulated with traditional message service data and an SIP message or an MSRP message being mapped with traditional message service data.

The message format converting modules for processing different format conversion can be located in different network elements or in the same network element.

Additionally, during conversion between an SIP message or an MSRP message and a traditional message, the message format converting module can further accomplish conversion of the format of the receiver identifier. For example, the receiver identifier of the message filled by the message sender is in a format of SIP URI or Tel URI, such as "sip:mike@example.com" of the format of SIP URI, and the message format converting module shall convert the receiver identifier to a URI in the format of E.164 or else, such as "mike@example.com" in the format of Email address, and vice versa. The converted format of the message receiver identifier complies with a format requirement of the network to which the message receiver belongs and can be identified by the network to which the message receiver belongs.

The message format determining module offers a trigger criterion for the message format converting module to execute conversion. In accordance with the foregoing message content indication parameter, MIME media type of the message contents, etc., the message format determining module determines the message service format of a received message service data from the message sender. In accordance with the network to which the message receiver belongs, the terminal capability of the message receiver, etc., the message format determining module further determines a message service format supported by the message receiver.

If the message service format of the message service data from the message sender does not match the message service format supported by the message receiver, the message format determining module can trigger the conversion executing function of the message format converting module.

The message format determining modules for processing different format determination can be located in different network elements or in the same network element.

Although the invention has been described with reference to the embodiments thereof, those ordinarily skilled in the art shall understand that modifications and variations can be made to the invention without departing from the spirit of the invention and they are intended to be encompassed in the appended claims without departing from the spirit of the invention.

## Claims

1. A method for transmitting message service data, **characterised by** comprising:
adding, at a message sender, the message service data into a Session Initiated Protocol message or a Message Session Relay Protocol message; and
transmitting the message service data to a message receiver through the Session Initiated Protocol message or the Message Session Relay Protocol message.

2. The method according to claim 1, **charaterised in that** the process of adding the message service data into the Session Initiated Protocol message or the Message Session Relay Protocol message comprises:
encapsulating, at the message sender, the message service data into a message body of the Session Initiation Protocol message or the Message Session Relay Protocol message.

3. The method according to claim 2, **charaterised in that** a format of the message service data comprises at least one of: a message service format of a Global System for Mobile Communications network, a message service format of a Code Division Multiple Access network, a message service format of a Public Switched Telephone Network, and a message service format of Email.

4. The method according to claim 2 or 3, charaterised by further comprising:
encapsulating the message service data into a Multipurpose Internet Mail Extensions body in the message body, and indicating a format of the message service data by a Multipurpose Internet Mail Extensions media type or a Multipurpose Internet Mail Extensions body field or a header parameter in the Session Initiated Protocol message or the Message Session Relay Protocol message.

5. The method according to claim 1, **charaterised in that** the process of adding the message service data into the Session Initiated Protocol message or the Message Session Relay Protocol message comprises:
mapping, at the message sender, the message service data into a message header and/or a message body of the Session Initiation Protocol message or the Message Session Relay Protocol message.

6. The method according to claim 5, **charaterised in that** the process of mapping the message service data into the message header and/or the message body of the Session Initiation Protocol message or the Message Session Relay Protocol message comprises:
carrying a message service control parameter in the message header of the Session Initiated Protocol message or the Message Session Relay Protocol message and/or in a Multipurpose Internet Mail Extensions body in the message body of the Session Initiated Protocol message or the Message Session Relay Protocol message; and
carrying message service contents in a Multipurpose Internet Mail Extensions body in the message body of the Session Initiated Protocol message or the Message Session Relay Protocol message.

7. The method according to claim 1, charaterised by further comprising:
executing message service format conversion when a message service format supported by the message sender is different from a message service format supported by the message receiver.

8. The method according to claim 7, **charaterised in that** the process of executing the message service format conversion comprises converting a message service control parameter and/or message service contents.

9. A system for transmitting message service data, charaterised by comprising a message service data processing module wherein the message service data processing module comprises:
a message adding module, adapted to add the message service data to be transmitted into a message header and/or a message body of a Session Initiated Protocol message or a Message Session Relay Protocol message; and
a transmitting module communicated with the message adding module, adapted to transmit the Session Initiated Protocol message or the Message Session Relay Protocol message being added with the message service data to a message receiver.

10. The system according to claim 9, **charaterised in that** the message service data processing module further comprises:
a receiving module, adapted to receive a Session Initiated Protocol message or a Message Session Relay Protocol message from another message service data processing module in the system; and
a message extracting module communicated with the receiving module, adapted to extract message service data from the Session Initiated Protocol message or the Message Session Relay Protocol message received by the receiving module.

11. The system according to claim 10, **charaterised in that** a device where the message service data processing module is located communicates with a device where a service data processing module is located over a Session Initiated Protocol domain network, or communicates with a circuit domain network or another IP network through the Session Initiated Protocol domain network.

12. The system according to claim 11, charaterised by further comprising:
a message format converting module, adapted to execute message service format conversion when a message service format supported by the message sender is different from a message service format supported by the message receiver.

13. The system according to claim 12, charaterised by further comprising:
a message format determining module, adapted to determine a source message service format and a destination message service format.

14. A system for transmitting message service data, charaterised by comprising:
a message data adding module, adapted to add message service data into a first message and to transmit the first message to a network element of a message receiver,
wherein the first message is a Session Initiated Protocol domain message carrying the message service data or a traditional circuit domain message carrying the message service data; the message service data is traditional message service data, or message information carried in a message body of a Session Initiated Protocol message or a Message Session Relay Protocol message; and the Session Initiated Protocol domain message carrying the message service data is a Session Initiation Protocol message or a Message Session Relay Protocol message, and the traditional circuit domain message carrying the message service data is a Mobile Application Part message or a Simple Mail Transfer Protocol message or a Hypertext Transfer Protocol message;
a message data extracting module, adapted to receive a second message from a network element of a message sender and to extract message service data carried in the second message,
wherein the second message is a Session Initiated Protocol domain message carrying the message service data or a circuit domain message carrying the message service data; and
a message format converting module, adapted to execute message service format conversion when a message service format supported by the first message is different from a message service format supported by the second message.

15. The system according to claim 14, charaterised by further comprising:
a message format determining module, adapted to determine the message service format of the first message and the message service format of the second message.

16. The system according to claim 15, **charaterised in that** the message format determining module comprises at least one of:
a network type determining sub-module, adapted to determine, in accordance with message service data in the first message, a type of a network to which the message service data receiver belongs;
a network interface type determining sub-module, adapted to determine, in accordance with the message service data in the first message, an interface type of the network;
a terminal capability determining sub-module, adapted to determine, in accordance with the network to which the message receiver belongs and/or a terminal capability of the message receiver, a format of message service data supported by the message receiver; and
a message service type determining sub-module, adapted to determine, in accordance with the first message, a format of the message service data carried in the first message.
